# EUROPÄISCHE PATENTSCHRIFT

(11) **EP 0 993 697 B1**
(45) Veröffentlichungstag und Bekanntmachung des Hinweises auf die Patenterteilung: **15.10.2003**
(21) Anmeldenummer: 98940114.6
(22) Anmeldetag: 02.07.1998
(51) Int. Cl.: H02P 3/04

(54) **ELEKTROMOTOR UND VERFAHREN ZUM BETREIBEN EINES ELEKTROMOTORS**
ELECTRIC MOTOR AND METHOD FOR OPERATING SUCH A MOTOR
MOTEUR ELECTRIQUE ET MODE D'UTILISATION D'UN TEL MOTEUR

(30) Priorität: 04.07.1997 DE 19728711; 08.08.1997 DE 19734405
(43) Veröffentlichungstag der Anmeldung: 19.04.2000
(73) Patentinhaber: Sew-Eurodrive GmbH & Co. KG, 76646 Bruchsal (DE)
(72) Erfinder: ROTH-STIELOW, Jörg, D-75015 Bretten (DE); SCHMIDT, Josef, D-76676 Graben-Neudorf (DE)
(74) Vertreter: Bohnenberger, Johannes, Dr.
(86) Internationale Anmeldenummer: EP9804088
(87) Internationale Veröffentlichungsnummer: WO99001926

(56) Entgegenhaltungen:
- EP-A- 0 242 671
- DE-A- 4 440 312
- US-A- 4 145 645
- PATENT ABSTRACTS OF JAPAN vol. 008, no. 226 (E-272), 17. Oktober 1984 & JP 59 106897 A (YASUKAWA DENKI SEISAKUSHO KK), 20. Juni 1984

## Beschreibung

Die Erfindung betrifft einen Elektromotor, umfassend eine elektromagnetisch betätigte, mechanische Bremse mit einer Erregerspule und einen Umrichter zum Betreiben des Elektromotors an Wechsel- bzw. Drehstromnetzen, sowie ein Verfahren zum Betreiben eines Elektromotors mit einer elektromagnetisch betätigbaren, mechanischen Bremse.

Elektrische Maschinen lassen sich sehr gut in ihrer Drehzahl steuern. Durch die heute vorliegenden Möglichkeiten der Elektronik können derartige Maschinen über Umrichter an Wechsel- bzw. Drehstromnetzen betrieben werden. Um die an sich schon gute Steuerbarkeit insbesondere beim Abbremsen zu verbessern, wie dies für viele Anwendungsfälle derartiger Maschinen gefordert wird, ist es bekannt, die Maschine als Generator zu betreiben und die beim Abbremsen erzeugte Energie über einen (Last-)Widerstand in Wärme zu verwandeln. Ein solcher zusätzlicher Lastwiderstand erfordert einen gewissen Kosten- und Konstruktionsaufwand, wobei darüber hinaus die erzeugte Wärme über entsprechende zusätzliche Einrichtungen abgeführt werden muß.

Weiterhin ist es bei derartigen, vorwiegend als Elektromotoren betriebenen Maschinen bekannt, mechanische Bremsen vorzusehen, die über eine Elektromagnet-Anordnung gelöst bzw. gelüftet werden können. Man bestromt also die Erregerspule der elektromagnetisch betätigten, mechanischen Bremse zusammen mit dem Elektromotor, so daß der Motor im unbestromten Zustand festgehalten wird.

Aus der EP-A-0242671 sind ein Elektromotor bzw. ein Verfahren zum Betreiben eines Elektromotors mit einer elektromagnetisch betätigbaren Bremse bekannt, wobei beim Abbremsen im generatorischen Betrieb elektrische Energie einer Erregerspule der Bremse zugeführt und dort als magnetische Energie zwischengespeichert und in Wärmeenergie umgesetzt wird. Beim Abschalten des Motors wird dem Bremssystem die magnetische Energie schnell entzogen, was die Bremse noch schneller einfallen läßt. Dies wird dadurch erreicht, daß der Motorstrom anstelle der am Motor anliegenden Spannung erfaßt wird. Der eigentliche Energieentzug beim Abbremsvorgang geschieht auch hier wieder durch einen Widerstand.

Der Erfindung liegt die Aufgabe zugrunde, einen Elektromotor sowie ein Verfahren zum Betreiben eines Elektromotors der eingangs genannten Art dahingehend weiterzubilden, daß der Abbremsvorgang mit einfachen Mitteln verbessert werden kann.

Diese Aufgabe wird durch ein Verfahren nach Patentanspruch 1 bzw. einen Elektromotor nach Patentanspruch 7 gelöst.

Ein wesentlicher Punkt der Erfindung liegt darin, daß die im generatorischen Betrieb während des Bremsvorgangs erzeugte elektrische Energie in der Erregerspule der elektromagnetisch lösbaren mechanischen Bremse in Wärme umgesetzt wird. Diese Idee ist insofern besonders überraschend, als während eines mechanischen Bremsens, wie es bei derartigen Elektromotoren bisher bekannt ist, der Erregerspule eben keine Energie zugeführt wird. Durch die erfindungsgemäße Idee gelingt es aber, ohne einen Bremswiderstand auszukommen und noch dazu die Speicherfunktion der Spuleninduktivität, also ihre besondere dynamische Wirkung auszunützen, welche diese Spule gegenüber einem zusätzlichen, üblicherweise verwendeten Ohmschen Widerstand aufweist. Hierbei wird bei einem starken Abbremsen im generatorischen Betrieb der Erregerspule ein Strom zugeführt, der wesentlich größer ist als der zum Lüften oder Halten der Bremse zugeführte Strom. Dies bedeutet, daß elektrische Eigenschaften der Spule ausgenützt werden, die im normalen Betrieb, beim üblichen Lüften der Bremse nicht ausgenützt werden. Der Erregerspule kann jedoch für eine gewisse Zeitdauer ein erheblich größerer Strom zugeführt werden, als dieser zum Lüften oder gar zum Halten der Bremse im normalen Betrieb zugeführt wird.

Vorzugsweise stellt man die thermische Belastung der Erregerspule fest und begrenzt den ihr zugeführten Strom auf einen vorbestimmten Betrag, wenn die thermische Belastung einen vorbestimmten (Temperatur-)Wert überschreitet. Dadurch kann sichergestellt werden, daß keine Schäden durch Überhitzung auftreten. Vorzugsweise wird bei Gefahr einer thermischen Überlastung der Strom auf den Haltestrom der Erregerspule begrenzt, also auf den Strom, der im Dauerbetrieb des Elektromotors fließt und auf den die Erregerspule "zugeschnitten" ist.

Bei einer bevorzugten Ausführungsform der Erfindung wird zur Feststellung der thermischen Belastung die Temperatur der Erregerspule gemessen. Bei dieser Art der Belastungsmessung kann mit besonders genauen Ergebnissen gerechnet werden. Bei einer alternativen, ggf. aber auch zusätzlich anzuwendenden Ausführungsform der Erfindung werden Strom- und/oder Spannung der Erregerspule überwacht und derart mit Parametern, die für die Erregerspule spezifisch sind, insbesondere mit der thermischen Zeitkonstante der Erregerspule zur Feststellung der thermischen Belastung verrechnet, daß nicht nur die jeweils momentane thermische Belastung feststellbar ist, sondern vielmehr auch jederzeit "hochgerechnet" werden kann, wie lange die Erregerspule noch mit der momentan anliegenden Bremsleistung beaufschlagt werden kann, bevor der Erregerstrom verringert werden muß. Dadurch kann ein optimales Bremsverhalten eingestellt werden.

Vorzugsweise wird zusätzlich zur Feststellung der thermischen Belastung der Erregerspule auch noch die Umgebungstemperatur festgestellt. Die Sicherheit vor Überlastung der Erregerspule wird dadurch erhöht. Gleiches gilt für eine Feststellung der Temperatur am Elektromotor durch einen entsprechenden, meist ohnehin schon vorhandenen Temperaturfühler. Nachdem die Bremse samt ihrer Erregerspule am Elektromotor befestigt ist und ein Wärmefluß stattfindet, gibt auch die Temperatur am Elektromotor einen Meßwert dafür, welche Wärme der Erregerspule noch zuführbar ist.

Nachfolgend werden zur Erläuterung der Erfindung Ausführungsbeispiele anhand von Abbildungen beschrieben.

Hierbei zeigen
- Fig. 1: eine Grundschaltung zur Ausführung des erfindungsgemäßen Verfahrens,
- Fig. 2: eine Prinzipschaltung der in Fig. 1 angedeuteten Leistungselektronik,
- Fig. 3: die Schaltung einer Ansteuereinheit,
- Fig. 4: die Schaltungseinzelheiten der Schaltung gemäß Fig. 3,
- Fig. 5: eine weitere Ausführungsform einer Ansteuereinheit,
- Fig. 6: eine dritte Ausführungsform einer Ansteuereinheit, und
- Fig. 7 und Fig. 8: zwei prinzipielle Darstellungen zur Erläuterung der Berechnung und/oder Messung der thermischen Belastung von Erregerspulen.

In der nachfolgenden Beschreibung werden für gleiche und gleichwirkende Teile dieselben Bezugsziffern verwendet.

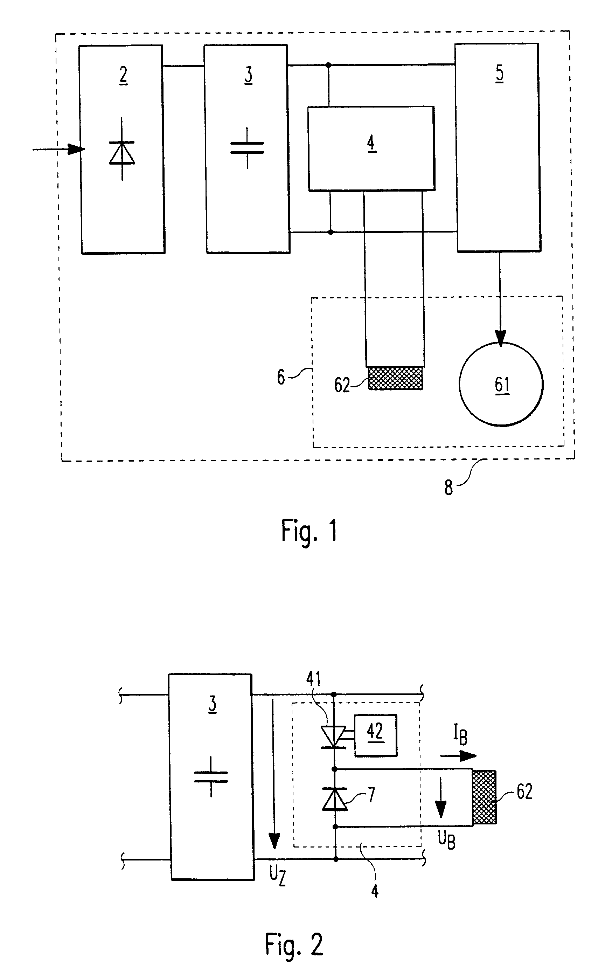

Bei der in Fig. 1 gezeigten Prinzipschaltung ist mit der Bezugsziffer 1 das Wechsel- oder Drehstromnetz bezeichnet, das auf einen Gleichrichter 2 geführt ist, dessen gleichgerichtete Ausgangsspannung auf einen Gleichspannungszwischenkreis 3 geführt ist. Am Ausgang des Gleichspannungszwischenkreises 3 sind Eingangsklemmen einer Bremssteuereinheit 4 parallel zu Eingangsklemmen eines Umrichters 5 angekoppelt.

Ausgangsklemmen der Bremssteuereinheit 4 sind mit einer Erregerspule 62 einer elektromagnetisch betätigten, mechanischen Bremse verbunden, die im bestromten Zustand einen Motor 61 frei laufen läßt und diesen im stromlosen Zustand abbremst.

Der Motor 61 wird in an sich bekannter Weise vom Umrichter 5 angesteuert.

Der Elektromotor 6 bildet zusammen mit dem Gleichrichter 2, der Bremssteuereinheit 4, der Erregerspule 62 und dem Umrichter 5 vorzugsweise eine gerätetechnische Einheit 8, insbesondere mit einem gemeinsamen Gehäuse.

Die Bremssteuereinheit 4 umfaßt, wie in Fig. 2 gezeigt, bei einer ersten Ausführungsform der Erfindung ein elektronisches Einwegeventil 41, das über eine Ansteuereinheit 42 ein- und ausschaltbar ist. Dieses Einwegeventil 41 bildet mit der Erregerspule 62 eine Reihenschaltung, welche an den Ausgangsklemmen des Gleichspannungszwischenkreises 3 liegt. Die Klemmen der Erregerspule 62 sind über eine umgekehrt zum Einwegeventil gepolte Freilaufdiode 7 verbunden.

In Fig. 2 sind der durch die Erregerspule 62 fließende Strom mit I_{B} und die über den Klemmen der Erregerspule 62 liegende Spannung mit U_{B} bezeichnet. Die Betriebsweise der Anordnung wird nachfolgend erläutert.

Der zum Lüften der elektromagnetisch betätigten, mechanischen Bremse erforderliche Gleichstrom hat den Wert I₁. Wenn dieser Strom fließt, so fällt über die Erregerspule 62 eine Spannung U₁ ab.

Wenn der Strom I₁ eingeschaltet wird, so vergeht eine Zeitdauer t₁ bis zum vollständigen Lüften der Bremse. Zum Halten der Bremse im gelüfteten Zustand ist nur ein Gleichstrom I₂ notwendig, der im allgemeinen kleiner oder aber gleich I₁ ist. Die hierbei längs der Erregerspule 62 abfallende Spannung hat den Wert U₂.

Aus der in Fig. 2 gezeigten Schaltung ist nun ersichtlich, daß das elektronisch ein- und ausschaltbare Einwegeventil 41 über die Ansteuereinheit 42 derart geschaltet werden kann, daß die gesamte Ausgangsspannung U_{Z} des Gleichspannungszwischenkreises 3 an die Erregerspule 62 angelegt werden kann. Die dadurch mögliche Betriebsweise wird nachfolgend erläutert.

Betriebszustand A: Dem Motor 61 wird vom Umrichter 5 kein Strom zugeführt. Die Erregerspule 62 ist ebenfalls stromlos. In diesem Betriebszustand steht der Motor festgebremst.

Betriebszustand B: Zu Beginn des Motobetriebs, also wenn der Umrichter 5 beginnt, dem Motor 61 Strom zuzuführen, führt die Bremssteuereinheit 4 der Erregerspule 62 für die Zeitdauer t₁ einen Gleichstrom I_{B} = I₁ zu, um die Bremse zu lüften.

Betriebszustand C: Während des motorischen (ungebremsten) Betriebs des Motors 61 führt die Bremssteuereinheit 4 den zum Halten der elektromagnetisch betätigten, mechanischen Bremse erforderlichen Gleichstrom I_{B} = I₂ durch die Erregerspule 62, wobei dieser Gleichstrom I₂ kleiner sein kann als der Gleichstrom I₁. Wenn der Haltestrom I₂ gleich dem zum Lüften notwendigen Strom I₁ ist, entfällt natürlich der zuvor beschriebene Betriebszustand B.

Betriebszustand D: Wenn der (laufende) Motor 61 gebremst werden soll, also in den generatorischen Betrieb überführt wird, so leitet die Bremssteuereinheit 4 den zum Halten der elektromagnetisch betätigten, mechanischen Bremse erforderlichen Gleichstrom I_{B} = I₂ durch die Erregerspule 62, sofern die vom Umrichter 5 in den Gleichspannungszwischenkreis 3 zurückgespeiste Leistung nicht größer ist als die zum Halten der elektromagnetisch betätigten, mechanischen Bremse erforderliche Leistung.

Betriebszustand E: Übertrifft die vom Umrichter 5 in den Gleichspannungszwischenkreis 3 zurückgespeiste Leistung aufgrund einer erhöhten Bremsleistung bzw. generatorischen Leistung die zum Halten der elektromagnetisch betätigten, mechanischen Bremse erforderliche Leistung, so leitet die Bremssteuereinheit 4 die gesamte zurückgespeiste Leistung des Elektromotors 61 in die Erregerspule 62. Dieser Strom ist natürlich erheblich größer als die vorgenannten Werte I₁ und I₂.

Betriebszustand F: Übersteigt die thermische Belastung durch den zugeführten Strom einen, für die Erregerspule 62 maximal zulässigen Wert, so reduziert die Bremssteuereinheit 4 den der Erregerspule 62 zugeführten Strom I_{B} auf den zum Halten der elektromagnetisch betätigten, mechanischen Bremse erforderlichen Gleichstrom I_{B} = I₂.

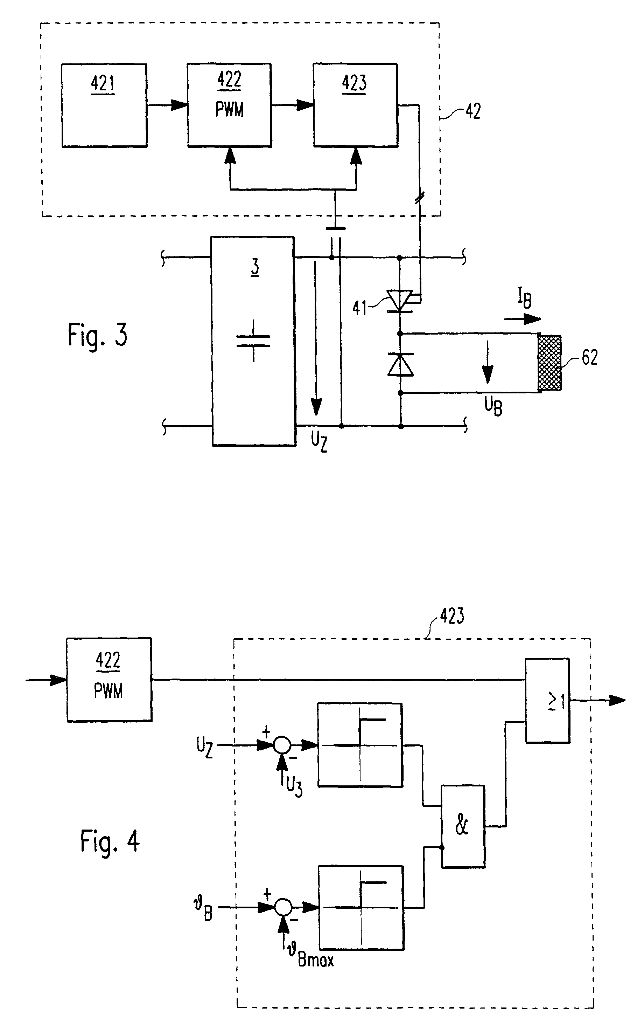

Nachfolgend wird eine bevorzugte Ausführungsform der Schaltung für eine Bremssteuereinheit 4 anhand der Figuren 3 und 4 beschrieben.

Wie in Fig. 3 angedeutet, umfaßt die Ansteuereinheit 42 einen Signalerzeuger 421, dessen Ausgang mit einem Eingang eines Pulsweitenmodulators (PWM) 422 verbunden ist. Der Ausgang des PWM 422 ist auf den Eingang einer Übersteuereinheit 423 geführt, deren Ausgang auf den Steuereingang des elektronisch ein- und ausschaltbaren Einwegeventils 41 geführt ist. Die gesamte Anordnung wird von den Ausgangsklemmen des Gleichspannungszwischenkreises 3 gespeist.

Die Ansteuerung durch die Übersteuereinheit 423 erfolgt nun derart, daß - bis auf den Betriebszustand E - die Übersteuereinheit 423 das Ausgangssignal des PWM 422 an das elektronische ein- und ausschaltbare Einwegeventil 41 leitet. Das relative Einschaltverhältnis bzw. Tastverhältnis λ des PWM 422 bestimmt in diesem Fall direkt den Gleichspannungsmittelwert U_{B} an der Erregerspule 62. Es gilt: U_{B} = λ • U_{Z}, wobei U_{Z} die Ausgangsklemmenspannung des Gleichspannungszwischenkreises 3 ist. Der Signalerzeuger 421 erzeugt den Vorgabewert für die Spannung U_{B}.

Übertrifft beim Bremsen im Betriebszustand E die vom Umrichter 5 in den Gleichspannungszwischenkreis 3 zurückgespeiste Leistung die zum Halten der elektromagnetisch betätigten, mechanischen Bremse erforderliche Leistung, so beginnt die Zwischenkreisspannung U_{Z} über den Wert der gleichgerichteten Netzspannung hinauszusteigen. Überschreitet U_{Z} dabei einen Grenzwert U₃, so wird das ein- und ausschaltbare Einwegeventil 41 von der Übersteuereinheit 423 in den leitenden Zustand versetzt, und zwar unabhängig von der Vorgabe des Pulsweitenmodulators 422.

Der Grenzwert U₃ ist nun so bemessen, daß er einerseits (nennenswert) oberhalb der gleichgerichteten Netzspannung und andererseits (nennenswert) unterhalb der maximal zulässigen Spannungsbelastbarkeit des Gleichrichters 2, des Gleichspannungszwischenkreises 3, der Bremssteuereinheit 4, des Umrichters 5, des Motors 61 sowie der Erregerspule 62 liegt.

Übersteigt während des Betriebszustands E ein durch einen Temperaturfühler erzeugtes Signal ϑ_{B} für die thermische Beanspruchung der Erregerspule 62 - wie dies weiter unten näher erläutert wird - den für diese maximal zulässigen Wert ϑ_{B}max, so wird der Betriebszustand F eingeleitet. In diesem Fall leitet die Übersteuereinheit 423 das Ausgangssignal des PWM 422 wieder an das elektronische, ein- und ausschaltbare Einwegeventil 41 derart, daß der der Erregerspule 62 zugeführte Strom I_{B} = I₂ wird, der Strom also auf den Wert gesenkt wird, den die Erregerspule 62 im Dauerbetrieb des Elektromotors 61 "aushält".

Der obige Sachverhalt ist in Fig. 4 in Form eines Regelkreises dargestellt. Hierbei umfaßt die Übersteuereinheit 423 eine erste Vergleichseinrichtung, welche dann ein positives (digitales) Ausgangssignal abgibt, wenn die Spannung U_{Z} an den Ausgangsklemmen des Gleichspannungszwischenkreises 3 eine vorbestimmte Spannung U₃ übersteigt. Dieser Grenzwert U₃ wurde oben bereits definiert.

Eine zweite Vergleichereinrichtung ist vorgesehen, welche einen aktuellen Temperaturwert ϑ_{B} mit einem maximal zulässigen Temperaturwert ϑ_{B}max vergleicht und dann ein positives (digitales) Ausgangssignal abgibt, wenn der aktuelle Wert den Maximalwert überschreitet.

Der Ausgangswert der ersten Vergleicherschaltung wird einem nicht-invertierenden Eingang eines UND-Gatters, der Ausgangswert der zweiten Vergleicherschaltung einem invertierenden Eingang des selben UND-Gatters zugeführt. Der Ausgang des UND-Gatters ist auf einen Eingang eines ODER-Gatters geführt, dessen anderer Eingang auf dem Ausgang des PWM 422 liegt. Der Ausgang des ODER-Gatters ist auf den Steuereingang des elektronischen ein- und ausschaltbaren Einwegeventils 41 geführt. Wie für den Fachmann ohne weiteres ersichtlich, führt diese Schaltungsanordnung das soeben im Zusammenhang mit Fig. 3 beschriebene Verfahren aus.

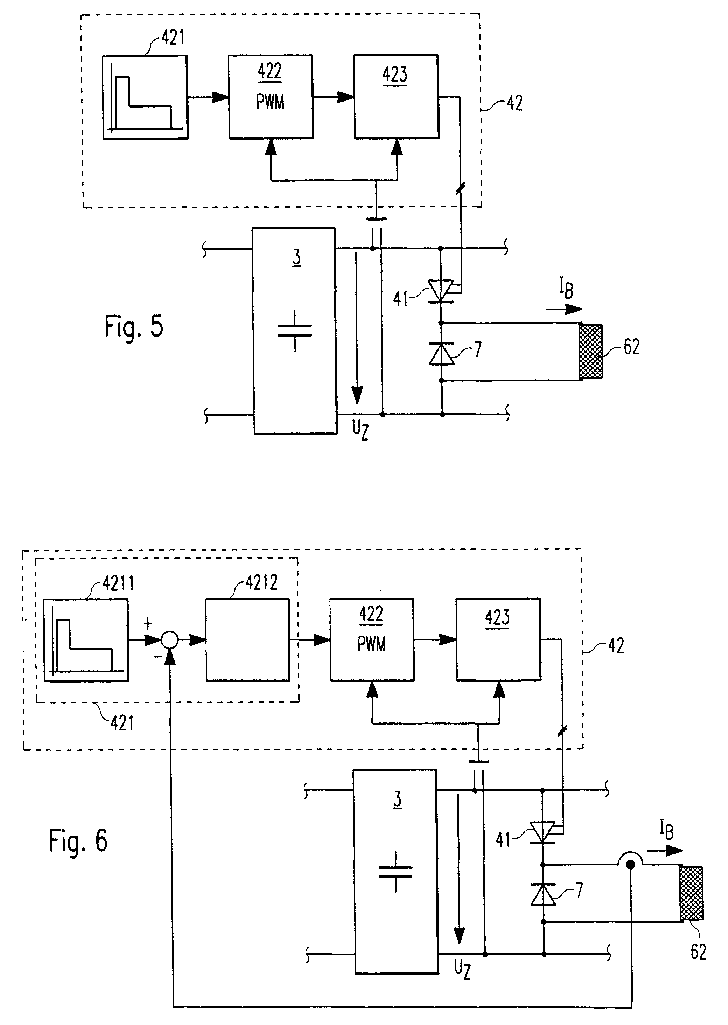

In Fig.5 ist nun nochmals angedeutet, daß die zum Strom I_{B} durch die Erregerspule 62 gehörige Spannung aus dem Signalerzeuger 421 dem PWM 422 zugeführt werden kann, wobei dieser Spannungswert U_{B}, der zum Strom I_{B} gehört, den Wert Null während des Betriebszustandes A, den Wert U₁ (gehörend zum Strom I₁) während des Betriebszustandes B und den Wert U₂ (gehörend zum Strom I₂) während der Betriebszustände C, D, E und F hat.

Es ist auch möglich, die Anordnung über eine Stromvorgabe bzw. Stromregelung zu betreiben, wie dies in Fig. 6 angedeutet ist. Hierbei umfaßt der Signalerzeuger 421 einen Profilgenerator 4211, dessen Ausgangssignal einem Vergleicher zugeführt wird, dessen Ausgang auf den Eingang einer Regeleinheit 4212 im Signalerzeuger 421 geführt ist. Dem Vergleicher wird ein zum Strom I_{B} durch die Erregerspule 62 proportionales Signal zugeführt, so daß das Ausgangssignal des Vergleichers dem Differenzwert (Regelabweichung) zwischen dem Ausgangswert (Sollwert) aus dem Profilgenerator 4211 und dem Strom-proportionalen Wert (Istwert) aus dem in Fig. 6 angedeuteten Stromfühler entspricht.

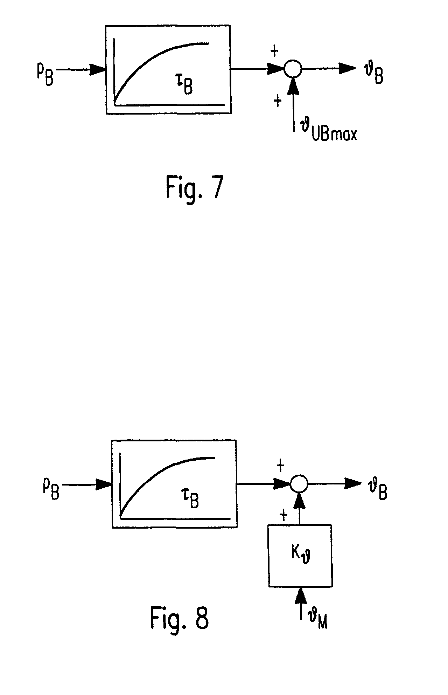

Bei allen hier gezeigten Anordnungen ist es nun von großem Vorteil, wenn der thermische Zustand bzw. die thermische Beanspruchung der Erregerspule 62 überwacht werden. Hierzu kann nun - wie in Fig. 7 angedeutet - aus einem Momentanwert p_{B} der Verlustleistung in der Erregerspule 62 unter dessen Verrechnung mit einer thermischen Zeitkonstante τ_{B} der Erregerspule 62 das Signal ϑ_{B} durch Verrechnung (Addition) mit einer Größe ϑ_{UB}max (entsprechend der maximalen Umgebungstemperatur der Erregerspule 62) gewonnen werden. Diese Größe ϑ_{B} wird dann, wie in Fig. 4 gezeigt, weiter verrechnet, um die Erregerspule 62 vor Überhitzung zu schützen.

Der Momentanwert der Verlustleistung in der Erregerspule 62, die Größe p_{B} wird rechnerisch ermittelt, und zwar aus dem (gemessenen) Strom bzw. der (gemessenen) Spannung durch die bzw. an der Erregerspule 62 und deren Ohmschen Widerstand, oder aus dem Steuersignal eines elektronischen ein- und ausschaltbaren Einwegeventils 41, dem (Meß-)Wert der Spannung an den Ausgangsklemmen des Gleichspannungszwischenkreises 3 und dem Meßwert für den Strom durch die Erregerspule 62 bzw. deren Ohmschen Widerstand oder aber aus dem Meßwert für die Spannung an der Erregerspule 62 und dem Meßwert für den Strom durch die Erregerspule 62. Der sich ergebende Wert ϑ_{B} gemäß Fig. 7 wird dann in der Schaltung gemäß Fig. 4 weiterverwendet.

Die Anordnung nach Fig. 8 unterscheidet sich von der nach Fig. 7 dadurch, daß nicht die fest vorgegebene maximale Umgebungstemperatur ϑ_{UB}max der Erregerspule 62, sondern vielmehr eine Temperatur ϑ_{M} mit in die Berechnung einfließt, welche einer am Motor 6 gemessenen Temperatur entspricht. Diese wiederum gibt ein Bild dafür ab, welche Temperatur die elektromagnetisch betätigte, mechanische Bremse bzw. die Erregerspule 62 aufweist, da die Bremse am Motor 61 in wärmeleitender Verbindung befestigt ist. Diese Motortemperatur ϑ_{M} erlaubt noch eine bessere Ausnutzung der Erregerspule 62, da in der Regel die Umgebungstemperatur ϑ_{UB} der Erregerspule 62 betriebsmäßig unterhalb des oben angenommenen Maximalwertes ϑ_{UB}max liegt. Der Faktor Kϑ, mit welchem die Motortemperatur ϑ_{M} gemäß Fig. 8 versehen wird, ist so bemessen, daß die Größe K_{ϑ} • ϑ_{M} ungefähr der tatsächlichen Umgebungstemperatur ϑ_{UB} der Erregerspule 62 entspricht.

### Bezugszeichenliste

- 1: Netz
- 2: Gleichrichter
- 3: Gleichspannungszwischenkreis
- 4: Bremssteuereinheit
- 5: Umrichter
- 6: Elektromotor mit elektromagnetisch betätigter, mechanischer Bremse
- 7: Freilaufdiode
- 8: gerätetechnische Einheit
- 41: elektronisches ein- und ausschaltbares Einwegeventil
- 42: Ansteuereinheit
- 421: Signalerzeuger
- 4211: Profilgenerator
- 4212: Regeleinheit für den Strom
- 422: Pulsweitenmodulator
- 423: Übersteuereinheit
- 61: Elektromotor
- 62: Erregerspule der elektromagnetisch betätigten, mechanischen Bremse

## Patentansprüche

1. Verfahren zum Betreiben eines Elektromotors mit einer elektromagnetisch betätigbaren Bremse, wobei beim Abbremsen im generatorischen Betrieb elektrische Energie einer Erregerspule (62) der Bremse zugeführt und dort als magnetische Energie zwischengespeichert und/oder in Wärmeenergie umgesetzt wird,
**dadurch gekennzeichnet, daß**
bei einem starken Abbremsen im generatorischen Betrieb der Erregerspule (62) ein Strom zugeführt wird, der wesentlich größer ist als der zum Lüften oder Halten der Bremse zugeführte Strom.

2. Verfahren nach Anspruch 1,
**dadurch gekennzeichnet, daß**
eine thermische Belastung der Erregerspule (62) festgestellt und der ihr zugeführte Strom auf einen vorbestimmten Betrag, vorzugsweise auf den Haltestrom, dann begrenzt wird, wenn die thermische Belastung einen vorbestimmten Betrag übersteigt.

3. Verfahren nach Anspruch 2,
**dadurch gekennzeichnet, daß**
zur Feststellung der thermischen Belastung die Temperatur der Erregerspule (62) gemessen wird.

4. Verfahren nach einem der Ansprüche 2 oder 3,
**dadurch gekennzeichnet, daß**
Strom und/oder Spannung der Erregerspule überwacht und mit Erregerspulen-spezifischen Parametern, insbesondere ihrer thermischen Zeitkonstante zur Feststellung der thermischen Belastung verrechnet werden.

5. Verfahren nach einem der Ansprüche 2 bis 4,
**dadurch gekennzeichnet, daß**
zur Feststellung der thermischen Belastung die Umgebungstemperatur festgestellt wird.

6. Verfahren nach einem der Ansprüche 2 bis 5,
**dadurch gekennzeichnet, daß**
zur Feststellung der thermischen Belastung die Temperatur am Elektromotor (6, 61) gemessen wird.

7. Elektromotor, umfassend eine elektromagnetisch betätigte, mechanische Bremse mit einer Erregerspule (62),
**dadurch gekennzeichnet, daß**
ein Umrichter (5) mit einer Bremssteuereinheit (4) vorgesehen ist, die derart steuerbar ausgebildet und mit den Klemmen des Elektromotors (61) sowie der Erregerspule (62) verbunden sind, daß beim Abbremsen des Elektromotors (61) von diesem im generatorischen Betrieb erzeugte elektrische Energie der Erregerspule (62) zur Zwischen-speicherung und/oder Umsetzung in Wärme zugeführt wird und,
daß
die Bremssteuereinheit (4) derart ausgebildet ist, daß bei einem starken Abbremsen im generatorischen Betrieb der Erregerspule (62) ein Strom zugeführt wird, der wesentlich größer ist als der zum Lüften oder Halten der Bremse zugeführte Strom.

8. Elektromotor nach Anspruch 7 ,
**gekennzeichnet durch**
Feststellungseinrichtungen zur Feststellung einer thermischen Belastung der Erregerspule (62), die derart ausgebildet und mit der Bremssteuereinheit (4) verschaltet sind, daß eine thermische Belastung der Erregerspule (62) festgestellt und der ihr zugeführte Strom auf einen vorbestimmten Betrag, vorzugsweise auf den Haltestrom dann begrenzt wird, wenn die thermische Belastung einen vorbestimmten Betrag überschreitet.

9. Elektromotor nach Anspruch 8,
**dadurch gekennzeichnet, daß**
die Feststellungseinrichtungen Temperaturfühler umfassen, welche die Temperatur an der Erregerspule (62) und/oder in deren Umgebung, insbesondere am Elektromotor (61) messen.

10. Elektromotor nach einem der Ansprüche 8 oder 9,
**dadurch gekennzeichnet, daß**
die Feststellungseinrichtungen derart ausgebildet sind, daß Strom und/oder Spannung der Erregerspule (62) überwacht und mit Erregerspule-spezifischen Parametern, insbesondere ihrer thermischen Zeitkonstante, zur Feststellung der thermischen Belastung verrechnet werden.

11. Elektromotor nach einem der Ansprüche 7 bis 10,
**dadurch gekennzeichnet, daß**
der Elektromotor (6) zusammen mit dem Gleichrichter (2), der Bremssteuereinheit (4), der Erregerspule (62) und dem Umrichter (5) eine gerätetechnische Einheit (8) bildet.

12. Elektromotor nach einem der Ansprüche 7 bis 11,
**dadurch gekennzeichnet, daß**
die Ausgangsspannung des Gleichrichters (2) auf einen Gleichspannungszwischenkreis (3) geführt ist, an den die Bremssteuereinheit (4) und der Umrichter (5) angekoppelt sind.

## Claims

1. Method for operating an electric motor with a brake which can be electromagnetically actuated, wherein electrical energy is supplied to an exciting coil (62) of the brake when braking in regenerative mode and stored temporarily as magnetic energy and/or converted into thermal energy here,
**characterised in that**
when braking hard in regenerative mode a current is supplied to the exciting coil (62) which is essentially greater than the current which is supplied for releasing or holding the brake.

2. Method according to Claim 1,
**characterised in that**
a thermal load of the exciting coil (62) is determined and the current which is supplied to the latter is limited to a predetermined magnitude, preferably to the holding current, if the thermal load exceeds a predetermined magnitude.

3. Method according to Claim 2,
**characterised in that**
the temperature of the exciting coil (62) is measured in order to determine the thermal load.

4. Method according to either of Claims 2 and 3,
**characterised in that**
the current and/or the voltage of the exciting coil is/are monitored and offset against specific exciting coil parameters, in particular its thermal time constant, in order to determine the thermal load.

5. Method according to any one of Claims 2 to 4,
**characterised in that**
the ambient temperature is determined in order to determine the thermal load.

6. Method according to any one of Claims 2 to 5,
**characterised in that**
the temperature at the electric motor (6, 61) is measured in order to determine the thermal load.

7. Electric motor, comprising a mechanical brake which can be electromagnetically actuated and has an exciting coil (62),
**characterised in that**
a converter (5) with a brake control unit (4) is provided, these being formed so as to be controllable and connected to the terminals of the electric motor (61) and the exciting coil (62) such that when the electric motor (61) is braked electrical energy generated by the latter in regenerative mode is supplied to the exciting coil (62) to be stored temporarily and/or converted into heat, and
that
the brake control unit (4) is formed such that when braking hard in regenerative mode a current is supplied to the exciting coil (62) which is essentially greater than the current which is supplied for releasing or holding the brake.

8. Electric motor according to Claim 7,
**characterised by**
determination devices for determining a thermal load of the exciting coil (62) which are formed and connected to the brake control unit (4) such that a thermal load of the exciting coil (62) is determined and the current which is supplied to the latter is limited to a predetermined magnitude, preferably to the holding current, if the thermal load exceeds a predetermined magnitude.

9. Electric motor according to Claim 8,
**characterised in that**
the determination devices comprise temperature sensors which measure the temperature at the exciting coil (62) and/or in the environment thereof, in particular at the electric motor (61).

10. Electric motor according to either of Claims 8 and 9,
**characterised in that**
the determination devices are formed such that the current and/or the voltage of the exciting coil (62) is/are monitored and offset against specific exciting coil parameters, in particular its thermal time constant, in order to determine the thermal load.

11. Electric motor according to any one of Claims 7 to 10,
**characterised in that**,
together with the rectifier (2), the brake control unit (4), the exciting coil (62) and the converter (5), the electric motor (6) forms a hardware unit (8).

12. Electric motor according to any one of Claims 7 to 11,
**characterised in that**
the output voltage of the rectifier (2) is supplied to a d.c. intermediate circuit (3), to which the brake control unit (4) and the converter (5) are coupled.

## Revendications

1. Procédé de fonctionnement d'un moteur électrique comprenant un frein à commande électromagnétique, de l'énergie électrique étant envoyée dans une bobine excitatrice (62) du frein lors du freinage en mode générateur et y étant accumulée temporairement sous forme d'énergie magnétique et/ou convertie en énergie thermique, **caractérisé en ce que**, lors d'un freinage intensif en mode générateur, un courant est envoyé dans la bobine excitatrice (62), ce courant étant essentiellement plus élevé que le courant d'alimentation pour le desserrage ou le maintien du frein.

2. Procédé suivant la revendication 1, **caractérisé en ce qu'**une charge thermique de la bobine excitatrice (62) est déterminée et le courant alimentant cette dernière est limité à une valeur prédéfinie, de préférence au courant de maintien, lorsque la charge thermique dépasse par le haut une valeur prédéfinie.

3. Procédé suivant la revendication 2, **caractérisé en ce que** la température de la bobine excitatrice (62) est mesurée pour déterminer la charge thermique.

4. Procédé suivant l'une des revendications 2 et 3, **caractérisé en ce que** le courant et/ou la tension de la bobine excitatrice sont surveillés et calculés avec des paramètres spécifiques de la bobine, en particulier sa constante de temps thermique, pour déterminer la charge thermique.

5. Procédé suivant l'une des revendications 2 à 4, **caractérisé en ce que** la température ambiante est déterminée pour établir la charge thermique.

6. Procédé suivant l'une des revendications 2 à 5, **caractérisé en ce que** la température est mesurée sur le moteur électrique (6, 61) pour déterminer la charge thermique.

7. Moteur électrique, comprenant un frein mécanique à commande électromagnétique avec une bobine excitatrice (62), **caractérisé en ce qu'**il est prévu un mutateur (5) avec une unité de commande de frein (4), qui sont réalisés avec une possibilité de commande et reliés aux bornes du moteur électrique (61) ainsi qu'à la bobine excitatrice (62) de sorte que, lors du freinage du moteur électrique (61), de l'énergie électrique produite par ce dernier en mode générateur est envoyée dans la bobine excitatrice (62) pour accumulation temporaire et/ou conversion en chaleur, et l'unité de commande de frein (4) est réalisée de sorte que, lors d'un freinage intensif en mode générateur, la bobine excitatrice (62) est alimentée en un courant qui est essentiellement plus élevé que le courant d'alimentation pour le desserrage ou le maintien du frein.

8. Moteur électrique suivant la revendication 7, **caractérisé par** des dispositifs de détermination d'une charge thermique de la bobine excitatrice (62), ces dispositifs étant réalisés et câblés avec l'unité de commande de frein (4) de sorte qu'une charge thermique de la bobine excitatrice (62) est déterminée et le courant envoyé à cette dernière est limité à une valeur prédéfinie, de préférence au courant de maintien, lorsque la charge thermique dépasse par le haut une valeur prédéfinie.

9. Moteur électrique suivant la revendication 8, **caractérisé en ce que** les dispositifs de détermination comprennent des capteurs de température, qui mesurent la température sur la bobine excitatrice (62) et/ou dans son ambiance, en particulier sur le moteur électrique (61).

10. Moteur électrique suivant l'une des revendications 8 et 9, **caractérisé en ce que** les dispositifs de détermination sont réalisés de sorte que le courant et/ou la tension de la bobine excitatrice (62) sont surveillés et calculés avec des paramètres spécifiques de la bobine, en particulier sa constante de temps thermique, pour déterminer la charge thermique.

11. Moteur électrique suivant l'une des revendications 7 à 10, **caractérisé en ce que** le moteur électrique (6) forme une unité d'appareils (8) avec le redresseur (2), l'unité de commande de frein (4), la bobine excitatrice (62) et le mutateur (5).

12. Moteur électrique suivant l'une des revendications 7 à 11, **caractérisé en ce que** la tension de sortie du redresseur (2) est transmise à un circuit intermédiaire de tension continue (3), auquel sont couplés l'unité de commande de frein (4) et le mutateur (5).
